# EUROPÄISCHE PATENTSCHRIFT

(11) **EP 1 584 801 B1**
(45) Veröffentlichungstag und Bekanntmachung des Hinweises auf die Patenterteilung: **25.03.2015**
(21) Anmeldenummer: 05007328.7
(22) Anmeldetag: 04.04.2005
(51) Int. Cl.: B01D 39/20, F01N 3/022, F01N 3/021

(54) **Vorrichtung zum Reinigen von Fahrzeugabgasen, insbesondere Dieselrussfilter, und Fahrzeug mit entsprechender Vorrichtung**
Device for purifying a motor vehicle exhaust gas, especially for a particle filter and motor vehicle comprising such device
Dispositif pour purifier des gaz d'échappement d'un véhicule automobile, en particulier pour un filtre à particules d'un moteur diesel, et véhicule automobile comportant un dispositif de ce type

(30) Priorität: 05.04.2004 DE 102004016690
(43) Veröffentlichungstag der Anmeldung: 12.10.2005
(73) Patentinhaber: EMCON Technologies LLC, Wilmington DE 19801 (US)
(72) Erfinder: Ranalli, Marco, 86161 Augsburg (DE); Noller, Christoph, 86343 Königsbrunn (DE)
(74) Vertreter: Prinz & Partner mbB

(56) Entgegenhaltungen:
- EP-A1- 1 371 406
- WO-A-03/078026
- JP-A- 58 104 314
- US-B1- 6 317 976

## Beschreibung

Die Erfindung betrifft eine Vorrichtung zum Reinigen von Fahrzeugabgasen, insbesondere einen Dieselrußfilter, mit einem gasdurchströmten einstückigen Filterkörper, der aus mehreren quaderförmigen Einzelkörpern zusammengesetzt ist und der im Querschnitt betrachtet eine von einer Kreisform abweichende runde Außenkontur besitzt, wobei die im Inneren des Filterkörpers liegenden Einzelkörper einen durch Seitenflächen begrenzten quadratischen Querschnitt besitzen und benachbarte, bearbeitete Einzelkörper mit ihren ebenen Seitenflächen an die Seitenflächen der innenliegenden Einzelkörper angrenzen.

Solche Filterkörper werden durch miteinander verklebte, stranggepreßte, einteilige, monolithische Einzelkörper (auch Substrat oder Monolith genannt), insbesondere aus SiC-Material, zusammengesetzt, wobei diese länglichen Einzelkörper, wie sie auf dem Markt erhältlich sind, vorzugsweise einen quadratischen Querschnitt besitzen. Die Einzelkörper haben auf einer Stirnseite zahlreiche in einem Sackloch endende, wabenförmig angeordnete, insbesondere im Querschnitt quadratische Einströmkanäle und hierzu benachbarte, nicht unmittelbar strömungsverbundene Ausströmkanäle, welche durch ebenfalls wabenförmige, genauer im Querschnitt quadratische, von der gegenüberliegenden Stirnwand ausgehende Sacklöcher gebildet sind. Das Abgas strömt von der einströmseitigen Stirnwand in die zahlreichen Kanäle, diffundiert durch die benachbarte Wand zu den Ausströmkanälen, wobei im Einströmkanal die Rußpartikel zurückgehalten werden. Die Abgaskatalysatoren sind entsprechend mit beschichteten Filterkörpern aufgebaut. Der aus Einzelkörpern zusammengesetzte Filterkörper wird außenseitig mechanisch bearbeitet, insbesondere rundgedreht. Bislang werden u.a. langgestreckte Filterkörper eingebaut, die eine kreiszylindrische Außenkontur besitzen. Inzwischen sind aber auch von einer Kreisform abweichende, mit einer runden Außenkontur versehene Filterkörper angedacht, die insbesondere eine größere Breite als Höhe besitzen, damit sie im Bereich des Fahrzeug-Unterbodens möglichst flach bauen.

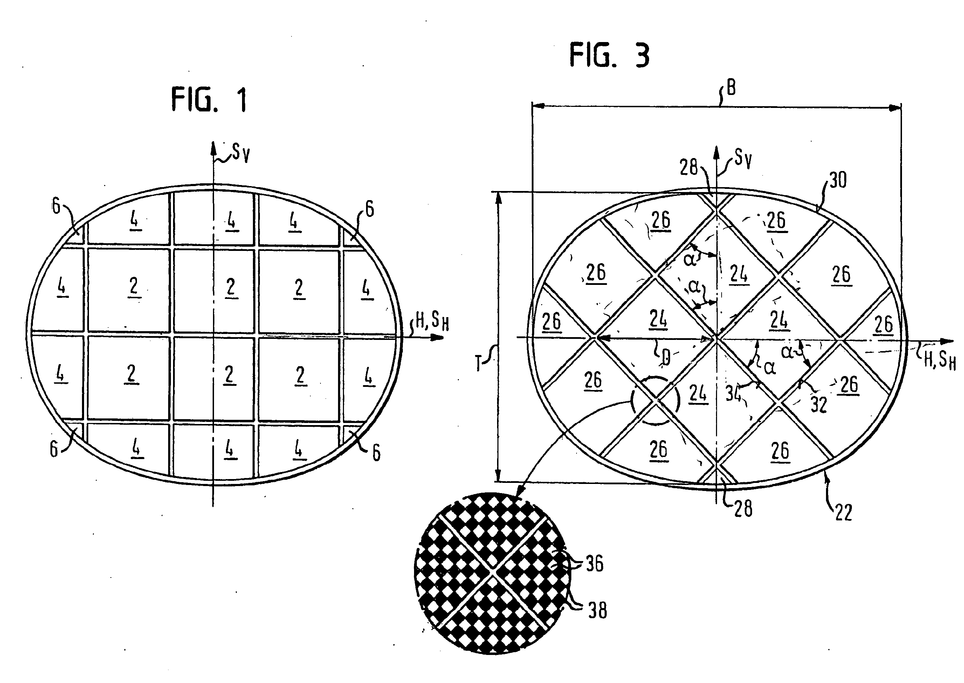

Ein Beispiel für einen solchen angedachten Filterkörper ist in Figur 1 dargestellt. Dieser Filterkörper hat eine ovale, genauer gesagt sogar eine elliptische Außenkontur und ist aus insgesamt 18 Einzelkörpern zusammengesetzt. Sechs Einzelkörper 2 mit quadratischem Querschnitt liegen auf ihrem Außenumfang unbearbeitet im Inneren des Filterkörpers und werden von bearbeiteten Einzelkörpern 4 und 6 umgeben. Die acht Einzelkörper 4 werden dabei durch acht ursprünglich quadratische, unbearbeitete Einzelkörper gebildet, die erst nach Erreichen des Verbundes außenseitig bearbeitet werden. Die vier kleinsten Einzelkörper 6 werden durch zwei Einzelkörper erzeugt, der in zwei kleine Abschnitte in Längsrichtung zersägt werden. Diese Abschnitte werden dann in die entsprechenden Lücken geklebt. Bei diesem bekannten Filterkörper wird Wert darauf gelegt, soviel Einzelkörper wie möglich als unbearbeitete Einzelkörper im Inneren des Filterkörpers unterzubringen, d.h. soviel Einzelkörper 2 wie möglich. Dies liegt daran, daß die außenliegenden Einzelkörper, die mechanisch bearbeitet werden, gegenüber innenliegenden, nicht bearbeiteten Einzelkörpern mit quadratischer Stirnfläche überproportional viel aktive Filteroberfläche verlieren. Das heißt, die umfangsmäßig bearbeiteten Einzelkörper verlieren zu den unbearbeiteten Einzelkörpern im Verhältnis wesentlich mehr Filterkapazität als Querschnittsfläche. Bei der Ausführung nach Figur 1 gemäß dem Stand der Technik werden für den Filterkörper insgesamt 18 Einzelkörper benötigt.

In der EP 1 371 406 A1 ist eine gattungsgemäße Vorrichtung zum Reinigen von Fahrzeugabgasen beschrieben, mit einem gasdurchströmten Filterkörper, der aus mehreren quaderförmigen Einzelkörpern zusammengesetzt ist und im Querschnitt eine von einer Kreisform abweichende runde Außenkontur aufweist. Um die Rissbildung bei thermischer Belastung zu minimieren und insgesamt die Dauerhaftigkeit des Filterkörpers zu erhöhen, sind die Einzelkörper dabei so angeordnet, dass im Querschnitt betrachtet der Abstand vom Schwerpunkt des Querschnitts zu einem Verbindungsbereich der miteinander verbundenen Einzelkörper höchstens ein Zehntel des maximalen Abstands vom Schwerpunkt des Querschnitts zum Rand des Filterkörpers beträgt.

Aufgabe der Erfindung ist es, eine Vorrichtung mit einem preisgünstigeren Filterkörper zu schaffen.

Diese Aufgabe wird durch eine erfindungsgemäße Vorrichtung mit den Merkmalen des Anspruchs 1 gelöst sowie durch ein Fahrzeug mit den Merkmalen des Anspruchs 13.

Zusätzlich kann vorgesehen sein, daß die Seitenflächen in einem schrägen Winkel zu einer Unterseite des Filterkörpers liegen, die eine bezogen auf die angrenzenden Abschnitte der Außenkontur geringere Krümmung besitzt.

Im Stand der Technik nach Figur 1 wurde darauf geachtet, daß einerseits soviel unbearbeitete Einzelkörper wie möglich im Inneren des Filterkörpers liegen, und andererseits wurden diese Einzelkörper mit den Seitenflächen parallel und rechtwinklig zu einer vertikalen Symmetrieachse Sᵥ und einer horizontalen Symmetrieachse S_{H} positioniert. Die Symmetrieachse S_{H} liegt darüber hinaus im Stand der Technik vorzugsweise in einer Horizontalebene H. Diese Horizontalebene wird auf den eingebauten Zustand der Vorrichtung im Fahrzeug bezogen. Da Zulieferer von Fahrzeugabgasreinigungssystemen immer den Einbauzustand ihrer Vorrichtung vom Fahrzeughersteller vorgegeben haben oder innerhalb dieses Einbauzustands ihre Reinigungsvorrichtung konstruieren müssen, ist die Einbaulage der Vorrichtung bezogen auf ein Fahrzeug immer klar definiert, zumal die Vorrichtung ja auch fest im Fahrzeug an vorgegebenen Stellen angeflanscht wird.

Die Erfindung setzt sich über die im Stand der Technik gefestigte vorbeschriebene Lehre hinweg und sieht nun vor, die Einzelkörper bezogen auf die Symmetrieachse und/oder die Horizontalebene zu verdrehen, so daß die Seitenflächen der Einzelkörper in einem schrägen Winkel zur Symmetrieachse/Horizontalebene liegen. "Schräg" bedeutet, die Seitenflächen sind weder parallel noch rechtwinklig zur Bezugsachse oder Bezugsebene. Durch diese schräge Anordnung läßt sich die Anzahl der zur Herstellung des Filterkörpers erforderlichen Einzelkörper reduzieren, wie später noch anhand von Figur 3 erläutert wird.

Die Symmetrieachse liegt im wesentlichen vertikal, bezogen auf den Einbauzustand, wobei der Filterkörper aber auch zueinander senkrechte Symmetrieachsen, immer bezogen auf den Querschnitt, aufweisen kann.

Die Anordnung der Einzelkörper erfolgt vorzugsweise symmetrisch zu der oder den Symmetrieachsen, d.h. es entsteht ein bezogen auf die Symmetrieachse(n) symmetrisches Muster.

Die Symmetrieachse steht darüber hinaus vorzugsweise senkrecht zur Horizontalebene.

Der schräge Winkel liegt gemäß der bevorzugten Ausführungsform in einem Bereich von 25° bis einschließlich 45°, vorzugsweise beträgt er etwa 45°.

Die erfindungsgemäße Anordnung der Einzelkörper ist insbesondere bei Filterkörpern vorteilhaft, die eine Breite von maximal dem 4,5-fachen der Diagonalen der unbearbeiteten Einzelkörper haben. Die Höhe sollte geringer sein, maximal etwa das 3,5-fache betragen.

Die Erfindung bezieht sich insbesondere auf eine Vorrichtung, bei der der Filterkörper eine Breite und eine Höhe aufweist, die jeweils zwischen dem 2- bis 3,5-fachen der Diagonalen der verwendeten Einzelkörper liegen.

Darüber hinaus betrifft die Erfmdung insbesondere eine Vorrichtung mit einem Filterkörper, der eine größere Breite, verglichen mit seiner Höhe besitzt.

Die Einzelkörper sind so ausgerichtet, daß ein Zentrum des Filterkörpers aus wenigstens vier zur Symmetrieachse/Horizontalebene/Bezugsfläche schräggestellten, unbearbeiteten Einzelkörper gebildet wird.

Der einstückige Filterkörper hat insbesondere eine im Querschnitt gesehen ovale oder sogar elliptische Außenkontur.

Die Erfindung betrifft darüber hinaus ein Fahrzeug mit einer erfindungsgemäßen Vorrichtung bei der der ovale oder elliptische Filterkörper so angeordnet und gefertigt ist, dass die Seitenflächen in einem Winkel in einem Bereich von 25° bis einschließlich 45° zu Horizontalebene liegen.

Zu betonen ist, daß die oben angegebenen Einzelmerkmale nicht zwingend mit anderen Merkmalen eines anderen Nebensatzes oder anderen Satzes kombiniert werden müssen, um vorteilhafte technische Effekte zu erreichen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 die bereits erläuterte Querschnittsansicht durch einen einstückigen Filterkörper einer Vorrichtung nach dem Stand der Technik,
- Figur 2 eine Längsschnittansicht durch eine erfindungsgemäße Vorrichtung zum Reinigen von Fahrzeugabgasen, hier eines Dieselrußfilters, als Teil des erfindungsgemäßen Fahrzeugs,
- Figur 3 eine Querschnittsansicht durch den bei der Vorrichtung nach Figur 2 verwendeten einstückigen Filterkörper mit einer zusätzlichen vergrößerten Teilansicht, und
- Figur 4 eine Querschnittsansicht durch einen etwas modifizierten einstückigen Filterkörper, der bei der erfindungsgemäßen Vorrichtung eingesetzt werden kann.

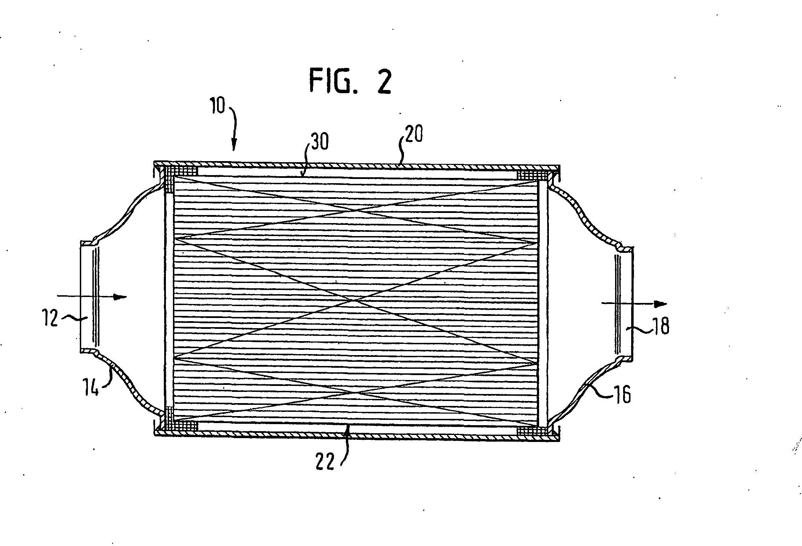

In Figur 2 ist eine Vorrichtung zum Reinigen von Fahrzeugabgasen dargestellt, die im Abgasstrang des Fahrzeugs liegt. Die gezeigte Vorrichtung ist ein Dieselrußfilter, sie kann jedoch auch entsprechend als Katalysator ausgebildet sein.

Die Vorrichtung hat ein langgestrecktes Gehäuse 10, das aus mehreren Teilen zusammengesetzt ist, nämlich aus einem mit einer Einströmöffnung 12 versehenen trichterförmigen Abschnitt 14, an dem entgegengesetzten Ende einem trichterförmigen Abschnitt 16 mit einer Ausströmöffnung 18 sowie einer Umfangswand 20, die durch ein umgeformtes Rohr oder durch Abkanten eines Bleches gebildet ist.

Im Inneren des Gehäuses 10 ist ein einstückiger Filterkörper 22 untergebracht, der aus mehreren quaderförmigen Einzelkörpern 24, 26, 28 zusammengesetzt ist (siehe Fig. 3). Die Einzelkörper 24 bis 28 sind insbesondere stranggepreßte, einteilige SiC-Körper mit einer Seitenlänge von 34 mm, deren Länge der Länge des gesamten Filterkörpers 22 entspricht und die ein stabförmiges Aussehen haben. Die in Reihen angeordneten Einzelkörper 24 bis 28 haben einen quadratischen Querschnitt und sind randflächenseitig mit benachbarten Einzelkörpern 24 bis 28 verklebt, wobei sich ein Schachbrettmuster ergibt.

Figur 3 zeigt, daß der Filterkörper 22 aus innenliegenden Einzelkörpern 24, die werkseitig mit unbearbeiteter Außenoberfläche zugeliefert werden und nach dem Aneinanderkleben umfangsseitig mechanisch (spanend) unbearbeitet bleiben, und randseitigen Einzelkörper 26, 28 besteht. Diese randseitigen Einzelkörper 26, 28 werden nach dem Zusammenkleben auf den Außenumfang spanend bearbeitet, so daß sich eine ovale, genauer gesagt in diesem Beispiel sogar elliptische Außenkontur 30 ergibt. Insbesondere werden ovale Außenkonturen benutzt und halbzylindrische Schmalseiten und diese verbindende tangentiale Längsseiten.

Figur 3 zeigt die Einbaulage des Filterkörpers 22 im Fahrzeug. Der Filterkörper 22 hat eine symmetrische Gestalt, mit einer vertikalen Symmetrieachse Sᵥ und einer horizontalen, also im rechten Winkel dazu stehenden Symmetrieachse S_{H}. Im vorliegenden Beispiel fällt die Symmetrieachse S_{H} in die Horizontalebene H. Darüber hinaus ist es aber auch möglich, daß der Filterkörper 22 leicht gekippt zur Horizontalebene H liegt, d.h. daß die Symmetrieachse S_{H} in einem spitzen Winkel zur Horizontalebene H liegt.

Die Breite B des Filterkörpers 22 übertrifft seine Höhe T. Die Breite B und die Höhe T liegen dabei zwischen dem 2- bis 3,5-fachen der Diagonale D der Einzelkörper 24 bis 28, welche in unbearbeitetem Zustand alle identische Abmaße besitzen.

Figur 3 ist auch zu entnehmen, daß die ebenen Seitenflächen 32, 34 aller Einzelkörper 24 bis 28 in einem schrägen Winkel α zu den Symmetrieachsen S_{H}, Sᵥ und zur Horizontalebene H liegen. Dieser Winkel α beträgt vorzugsweise zwischen 25 bis 45°, in der dargestellten bevorzugten Ausführungsform etwa 45°. Das bedeutet, die Diagonalen der Einzelkörper 24 bis 28 verlaufen parallel bzw. rechtwinklig zu den Symmetrieachsen Sᵥ, S_{H} und zur Horizontalebene H. Sie verlaufen damit auch senkrecht bzw. parallel zu der im Inneren des Filterkörpers 22 liegenden Strecke, die die maximale Breite B des Filterkörpers 22 definiert (vorliegend wäre dies der im Inneren des Filterkörpers 22 liegende Teil der Symmetrieachse S_{H}).

Die Ausrichtung und Anordnung der Einzelkörper 24 bis 28 erfolgt im Querschnitt betrachtet symmetrisch zu der oder den Symmetrieachsen Sᵥ und S_{H}, so daß sich ein zu diesen Achsen symmetrisches Muster ergibt.

Wie sich überraschenderweise anhand eines Vergleichs der Figuren 1 und 3 ergibt, sind für die gleiche Querschnittsfläche des Filterkörpers 22 deutlich weniger Einzelkörper 24 bis 28 gemäß der erfmdungsgemäßen Ausführungsform notwendig. Neben den vier unbearbeiteten, innen liegenden Einzelkörpern 24 werden zehn relativ großflächige bearbeitete Einzelkörper 26 sowie ein zu zwei Teilen längs zersägter Einzelkörper 28 verwendet, der schließlich die im Querschnitt kleinsten Teil-Einzelkörper 28 ergibt.

Während bei der Ausführungsform nach dem Stand der Technik 18 Einzelkörper zur Bildung des Filterkörpers notwendig sind, werden bei der Ausführungsform nach Figur 3 lediglich 15 Einzelkörper verwendet, was lediglich aufgrund der diagonalen Anordnung ermöglicht wird.

Was die Form der Einzelkörper 24 bis 28 anbelangt, so haben diese zahlreiche im Querschnitt wabenförmige oder quadratische Einströmkanäle 36 (siehe die herausgezogene vergrößerte Ansicht in Figur 3), die sich mit im wesentlichen quadratischen Wänden 38 abwechseln, so daß sich eine Art Wabenstruktur oder Schachbrettmuster ergibt. Die Einströmkanäle 36 erstrecken sich tief in die Einzelkörper 24 bis 28 und enden darin jeweils als Sackloch, indem am ausströmseitigen Ende Stopfen in die Einströmkanäle 36 eingepreßt werden. Von der gegenüberliegenden Stirnseite, der Ausströmseite aus, ragen Ausströmkanäle in die Wände 38 und enden dort ebenfalls als Sacklöcher. Es ergibt sich also auf der gegenüberliegenden Stirnseite eine Ansicht mit einem ähnlichen Waben- oder Schachbrettmuster, nur versetzt zu dem Muster auf der Einströmseite.

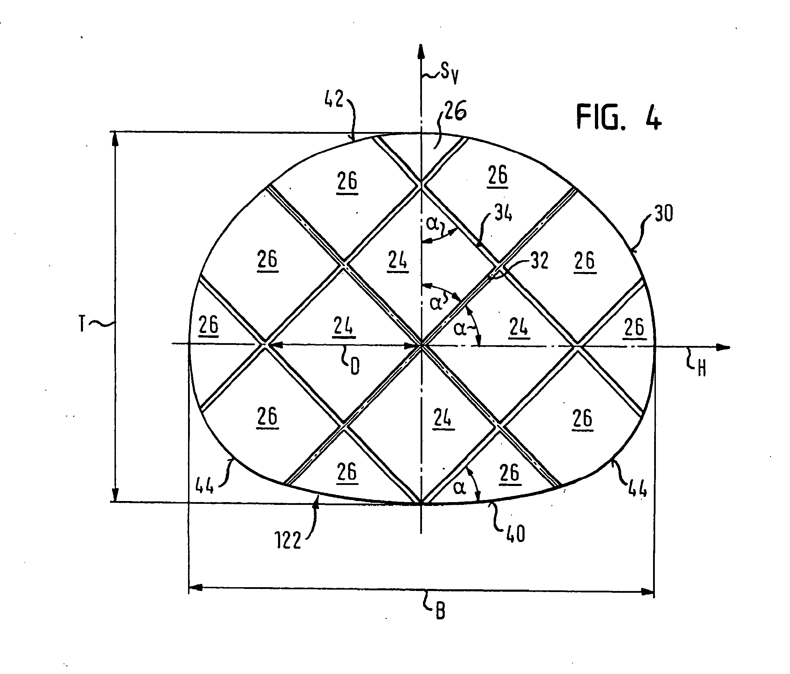

Die Ausführungsform nach Figur 4 entspricht im Aufbau des Filterkörpers 122 weitestgehend dem Filterkörper 22 nach Figur 3. Der Filterkörper 122 hat eine ovale Außenkontur 30, die jedoch nur zur Achse Sᵥ symmetrisch ist. Eine zweite Symmetrieachse wie die Symmetrieachse S_{H} gibt es hier nicht. Die Symmetrieachse Sᵥ steht rechtwinklig zur Horizontalebene H, sie kann aber auch leicht gekippt zu dieser verlaufen. Die Außenkontur 30 besitzt eine, bezogen auf den eingebauten Zustand, abgeflachte Unterseite 40, die eine wesentlich geringere Krümmung besitzt als die Oberseite 42 und die dazwischenliegenden Abschnitte 44, die an die Unterseite 40 angrenzen.

Auch bei dieser Ausführungsform wird die Anzahl der notwendigen Einzelkörper 24 bis 26 dadurch stark reduziert, daß sie gekippt zu der Symmetrieachse Sᵥ, zur Horizontalebene H und auch zur Unterseite 40 verlaufen, nämlich unter einem Winkel α, der im Bereich von 25 bis 45° liegt, vorliegend 45° beträgt.

Auch bei dieser Ausführungsform ist die Diagonale der quadratischen Einzelkörper 24 bis 26 im wesentlichen parallel zu der die maximale Dicke definierten Strecke, vorliegend ist dies die Breite B, ausgerichtet. Auch bei dieser Ausführungsform übersteigt die Breite B die Höhe T, und beide liegen zwischen dem 2-und 3,5-fachen der Diagonalen D der verwendeten Einzelkörper 24 bis 26.

## Patentansprüche

1. Vorrichtung zum Reinigen von Fahrzeugabgasen, insbesondere Dieselrußfilter, mit
einem gasdurchströmten einstückigen Filterkörper (22; 122), der aus mehreren quaderförmigen Einzelkörpern (24 bis 28) zusammengesetzt ist und der im Querschnitt betrachtet eine von einer Kreisform abweichende runde Außenkontur (30) besitzt,
wobei die im Inneren des Filterkörpers (22; 122) liegenden Einzelkörper (24) einen durch Seitenflächen (32, 34) begrenzten quadratischen Querschnitt besitzen und benachbarte, bearbeitete Einzelkörper (26, 28) mit ihren ebenen Seitenflächen (32, 34) an die Seitenflächen (32, 34) der innenliegenden Einzelkörper (24) angrenzen,
**dadurch gekennzeichnet, dass**
die Seitenflächen (32, 34) in einem schrägen Winkel (α) zu einer Symmetrieachse (S_{V}, S_{H}) des Filterkörpers (22; 122) liegen und die Anordnung der Einzelkörper (24) symmetrisch zu der Symmetrieachse (S_{V}, S_{H}) erfolgt
und/oder dass der Filterkörper (22; 122) eine im Querschnitt gesehen ovale oder elliptische Außenkontur (30) besitzt und die Seitenflächen (32, 34) in einem schrägen Winkel (α) zu einer Symmetrieachse (S_{V}, S_{H}) des Filterkörpers (22; 122) liegen.

2. Vorrichtung nach Anspruch 1, **dadurch gekennzeichnet, dass** die Seitenflächen (32, 34) in einem schrägen Winkel (α) zu einer Unterseite (40) des Filterkörpers (122), die eine bezogen auf die angrenzenden Abschnitte (44) der Außenkontur (30) geringere Krümmung besitzt, liegen.

3. Vorrichtung nach Anspruch 1 oder 2, **dadurch gekennzeichnet, dass** die Symmetrieachse (S_{V}) im wesentlichen vertikal, bezogen auf den Einbauzustand, liegt.

4. Vorrichtung nach einem der vorhergehenden Ansprüche, **dadurch gekennzeichnet, dass** der Filterkörper (22) zueinander senkrechte Symmetrieachsen (S_{V}, S_{H}) besitzt.

5. Vorrichtung nach einem der vorhergehenden Ansprüche, **dadurch gekennzeichnet, dass** die Anordnung der Einzelkörper (22 bis 28) symmetrisch zu der oder den Symmetrieachsen (S_{V}, S_{H}) erfolgt.

6. Vorrichtung nach einem der vorhergehenden Ansprüche, **dadurch gekennzeichnet, dass** die Symmetrieachse (S_{V}) senkrecht zur Horizontalebene (H) steht.

7. Vorrichtung nach einem der vorhergehenden Ansprüche, **dadurch gekennzeichnet, dass** der schräge Winkel (α) in einen Bereich von 25° bis einschließlich 45° liegt.

8. Vorrichtung nach einem der vorhergehenden Ansprüche, **dadurch gekennzeichnet, dass** der schräge Winkel (α) etwa 45° beträgt.

9. Vorrichtung nach einem der vorhergehenden Ansprüche, **dadurch gekennzeichnet, dass** der Filterkörper (22; 122) eine größere Breite (B) verglichen zu seiner Höhe (T) besitzt.

10. Vorrichtung nach Anspruch 9, **dadurch gekennzeichnet, dass** der Filterkörper (22) eine Breite (8) besitzt, die maximal das 4,5-fache der Diagonalen (D) der unbearbeiteten Einzelkörper (24) beträgt.

11. Vorrichtung nach Anspruch 9 oder 10, **dadurch gekennzeichnet, dass** der Filterkörper (22) eine Höhe (T) besitzt, die maximal das 3,5-fache der Diagonalen (D) der unbearbeiteten Einzelkörper (24) beträgt.

12. Vorrichtung nach einem der Ansprüche 9 bis 11, **dadurch gekennzeichnet, dass** der Filterkörper (22) eine Breite (B) und eine Höhe (T) hat, die jeweils zwischen dem 2- bis 3,5-fachen der Diagonalen (D) der unbearbeiteten Einzelkörper (24 bis 28) liegen.

13. Fahrzeug, mit einer Vorrichtung zum Reinigen von Fahrzeugabgasen insbesondere Dieselrußfilter, mit
einem gasdurchströmten einstückigen Filterkörper (22; 122), der aus mehreren quaderförmigen Einzelkörpern (24 bis 28) zusammengesetzt ist und der im Querschnitt betrachtet eine von einer Kreisform abweichende runde Außenkontur (30) besitzt,
wobei die im Inneren des Filterkörpers (22; 122) liegenden Einzelkörper (24) einen durch Seitenflächen (32, 34) begrenzten quadratischen Querschnitt besitzen und benachbarte, bearbeitete Einzelkörper (26, 28) mit ihren ebenen Seitenflächen (32, 34) an die Seitenflächen (32, 34) der innenliegenden Einzelkörper (24) angrenzen,
**dadurch gekennzeichnet, dass**
der Filterkörper (22; 122) eine im Querschnitt gesehen ovale oder elliptische Außenkontur (30) besitzt und die Seitenflächen (32, 34) in einem schrägen Winkel (α) in einen Bereich von 25° bis einschließlich 45° zur, bezogen auf den Einbauzustand der Vorrichtung im Fahrzeug, Horizontalebene (H) liegen

## Claims

1. A device for purifying vehicle exhaust gases, in particular a diesel particulate filter, comprising
a one-piece filter body (22; 122) through which gas flows and which is composed of a plurality of cuboid individual bodies (24 to 28) and which, as viewed in cross-section, has a round outer contour (30) deviating from a circular shape,
the individual bodies (24) located in the interior of the filter body (22; 122) having a square cross-section defined by side faces (32, 34), and neighboring, machined individual bodies (26, 28) adjoining, by their plane side faces (32, 34), the side faces (32, 34) of the interior individual bodies (24),
**characterized in that**
the side faces (32, 34) are disposed so as to have an oblique angle (α) with an axis of symmetry (S_{V}, S_{H}) of the filter body (22; 122), and the arrangement of the individual bodies (24) is effected symmetrically to the axis of symmetry (S_{V}, S_{H}),
and/or that the filter body (22; 122) has an oval or elliptic outer contour (30) as seen in cross-section, and the side faces (32, 34) are disposed so as to have an oblique angle (α) with an axis of symmetry (S_{V}, S_{H}) of the filter body (22; 122).

2. The device according to claim 1, **characterized in that** the side faces (32, 34) are disposed so as to have an oblique angle (α) with an underside (40) of the filter body (122), the underside having a smaller curvature as compared to the adjoining portions (44) of the outer contour (30).

3. The device according to claim 1 or 2, **characterized in that** the axis of symmetry (S_{V}) is disposed so as to be substantially vertical, as related to the installed condition.

4. The device according to any of the preceding claims, **characterized in that** the filter body (22) has axes of symmetry (S_{V}, S_{H}) which are perpendicular to each other.

5. The device according to any of the preceding claims, **characterized in that** the arrangement of the individual bodies (22 to 28) is effected symmetrically to the axis or axes of symmetry (S_{V}, S_{H}).

6. The device according to any of the preceding claims, **characterized in that** the axis of symmetry (S_{V}) is perpendicular to the horizontal plane (H).

7. The device according to any of the preceding claims, **characterized in that** the oblique angle (α) lies in a range of from 25° up to and including 45°.

8. The device according to any of the preceding claims, **characterized in that** the oblique angle (α) amounts to approximately 45°.

9. The device according to any of the preceding claims, **characterized in that** the filter body (22; 122) has a width (B) which is larger than its height (T).

10. The device according to claim 9, **characterized in that** the filter body (22) has a width (B) which amounts to a maximum of 4.5 times the diagonal (D) of the unmachined individual bodies (24).

11. The device according to claim 9 or 10, **characterized in that** the filter body (22) has a height (T) which amounts to a maximum of 3.5 times the diagonal (D) of the unmachined individual bodies (24).

12. The device according to any of claims 9 to 11, **characterized in that** the filter body (22) has a width (B) and a height (T) which each are in the range between 2 and 3.5 times the diagonal (D) of the unmachined individual bodies (24 to 28).

13. A vehicle comprising a device for purifying vehicle exhaust gases, in particular a diesel particulate filter, comprising
a one-piece filter body (22; 122) through which gas flows and which is composed of a plurality of cuboid individual bodies (24 to 28) and which, as viewed in cross-section, has a round outer contour (30) deviating from a circular shape,
the individual bodies (24) located in the interior of the filter body (22; 122) having a square cross-section defined by side faces (32, 34), and neighboring, machined individual bodies (26, 28) adjoining, by their plane side faces (32, 34), the side faces (32, 34) of the interior individual bodies (24),
**characterized in that**
the filter body (22; 122) has an oval or elliptic outer contour (30) as seen in cross-section, and the side faces (32, 34) are disposed so as to have an oblique angle (α) in a range of from 25° up to and including 45° with the horizontal plane (H), as related to the installed condition of the device in the vehicle.

## Revendications

1. Dispositif d'épuration de gaz d'échappement de véhicule, en particulier filtre à particules, comportant
un corps de filtre (22 ; 122) d'une seule pièce traversé par du gaz, qui est composé de plusieurs corps individuels (24 à 28) en forme de parallélépipède et qui, vu dans une section transversale, présente un contour extérieur (30) rond différent de la forme d'un cercle,
les corps individuels (24) placés à l'intérieur du corps de filtre (22 ; 122) présentant une section transversale carrée délimitée par des faces latérales (32, 34), et des corps individuels (26, 28) voisins traités étant adjacents aux faces latérales (32, 34) des corps individuels (24) intérieurs par leur faces latérales planes (32, 34),
**caractérisé en ce que**
les faces latérales (32, 34) sont agencées sous un angle en oblique (α) par rapport à un axe de symétrie (S_{V}, S_{H}) du corps de filtre (22 ; 122), et **en ce que** l'agencement des corps individuels (24) est effectué de manière symétrique par rapport à l'axe de symétrie (S_{V}, S_{H}),
et/ou **en ce que** le corps de filtre (22 ; 122) présente un contour extérieur (30) ovale ou elliptique, vu dans une section transversale, et **en ce que** les faces latérales (32, 34) sont agencées sous un angle oblique (α) par rapport à un axe de symétrie (S_{V}, S_{H}) du corps de filtre (22 ; 122).

2. Dispositif selon la revendication 1, **caractérisé en ce que** les faces latérales (32, 34) sont agencées sous un angle oblique (α) par rapport à une face inférieure (40) du corps de filtre (122), laquelle présente une courbure plus faible par rapport aux tronçons adjacents (44) du contour extérieur (30).

3. Dispositif selon la revendication 1 ou 2, **caractérisé en ce que** l'axe de symétrie (S_{V}) est agencé de manière sensiblement verticale en se référant à l'état de montage.

4. Dispositif selon l'une des revendications précédentes, **caractérisé en ce que** le corps de filtre (22) présente des axes de symétrie (S_{V}, S_{H}) perpendiculaires l'un à l'autre.

5. Dispositif selon l'une des revendications précédentes, **caractérisé en ce que** l'agencement des corps individuels (22 à 28) est effectué symétriquement par rapport à l'axe de symétrie ou aux axes de symétrie (S_{V}, S_{H}).

6. Dispositif selon l'une des revendications précédentes, **caractérisé en ce que** l'axe de symétrie (S_{V}) est agencé perpendiculairement au plan horizontal (H).

7. Dispositif selon l'une des revendications précédentes, **caractérisé en ce que** l'angle en oblique (α) est compris dans une plage entre 25° et 45° inclusivement.

8. Dispositif selon l'une des revendications précédentes, **caractérisé en ce que** l'angle en oblique (α) est d'environ 45°.

9. Dispositif selon l'une des revendications précédentes, **caractérisé en ce que** le corps de filtre (22 ; 122) présente une largeur (B) plus grande en comparaison avec sa hauteur (T).

10. Dispositif selon la revendication 9, **caractérisé en ce que** le corps de filtre (22) présente une largeur (B) qui est au maximum égale à 4,5 fois la diagonale (D) des corps individuels (24) non traités.

11. Dispositif selon la revendication 9 ou 10, **caractérisé en ce que** le corps de filtre (22) présente une hauteur (T) qui est au maximum égale à 3,5 fois la diagonale (D) des corps individuels (24) non traités.

12. Dispositif selon l'une des revendications 9 à 11, **caractérisé en ce que** le corps de filtre (22) présente une largeur (B) et une hauteur (T) qui sont chacune comprise entre 2 et 3,5 fois la diagonale (D) des corps individuels (24 à 28) non traités.

13. Véhicule, présentant un dispositif pour l'épuration de gaz d'échappement de véhicule, en particulier filtre à particules, comportant
un corps de filtre (22 ; 122) d'une seule pièce traversé par du gaz, qui est composé de plusieurs corps individuels (24 à 28) en forme de parallélépipède et qui, vu dans une section transversale, présente un contour extérieur (30) rond différent de la forme d'un cercle,
les corps individuels (24) placés à l'intérieur du corps de filtre (22 ; 122) présentant une section transversale carrée délimitée par des faces latérales (32, 34), et des corps individuels (26, 28) voisins traités étant adjacents aux faces latérales (32, 34) des corps individuels (24) intérieurs par leur faces latérales planes (32, 34),
**caractérisé en ce que**
le corps de filtre (22 ; 122) présente un contour extérieur (30) ovale ou elliptique (30), vu dans une section transversale, et **en ce que** les faces latérales (32, 34) sont agencées sous un angle oblique (α) dans une plage de 25° à 45° inclusivement par rapport au plan horizontal (H) en se référant à l'état de montage du dispositif dans le véhicule.
